# EUROPÄISCHE PATENTSCHRIFT

(11) **EP 0 811 531 B1**
(45) Veröffentlichungstag und Bekanntmachung des Hinweises auf die Patenterteilung: **30.07.2003**
(21) Anmeldenummer: 97108668.1
(22) Anmeldetag: 30.05.1997
(51) Int. Cl.: B60R 21/20

(54) **Airbagmodul mit Hupenschalter**
Airbag module with horn switch
Module de sac à air avec interrupteur de klaxon

(30) Priorität: 07.06.1996 DE 19622863
(43) Veröffentlichungstag der Anmeldung: 10.12.1997
(73) Patentinhaber: ADAM OPEL AG, 65423 Rüsselsheim (DE)
(72) Erfinder: Ulrich, Rick, Dipl.-Ing., 55595 Roxheim (DE)
(74) Vertreter: Kümpfel, Heinz, Dipl.-Ing.

(56) Entgegenhaltungen:
- EP-A- 0 370 613
- WO-A-95/20233
- DE-A- 4 034 539
- DE-U- 29 606 322
- US-A- 3 819 205

## Beschreibung

Die Erfindung betrifft einen am Lenkrad eines Kraftfahrzeuges anordenbaren Airbagmodul mit einem Hupenschalter, der als druckempfindliche Schaltfolie ausgebildet ist.

Eine Airbageinrichtung mit einem druckempfindlichen Hupenschalter ist aus DE 43 10 625 bekannt. Bei dieser bekannten Einrichtung ist der Hupenschalter Teil einer Kissenanordnung, bestehend aus einer Deckschicht aus einem elastischen Kunstharz, einer steifen Einlage, die in der Seitenwand des Kissens eingebettet ist, einem aus Metallblechen zusammengesetzten Schalter, wobei die Metallbleche eine stabilisierende Form haben und an der steifen Einlage abgestützt sind. Die Kontaktzungen des Hupenschalters liegen zwischen der elastischen Deckschicht und dem Paket des gefalteten Luftsackes, der wiederum auf dem Diffusor des Gasgenerators aufliegt. Die Höhe des Paketes des gefalteten Luftsackes kann bei Serienfertigung nicht einheitlich hergestellt werden. Es muß vielmehr mit einer erheblichen Toleranz für das Höhenmaß dieses Paketes gerechnet werden. Da sich darauf jedoch die Kontaktzungen des Hupenschalters abstützen, ist der Betätigungsweg des Hupenschalters abhängig von der realen Höhe des Luftsackpaketes und damit innerhalb einer Serie gleichfalls mit der entsprechenden großen Toleranz behaftet. Dies kann dazu führen, daß innerhalb einer Serie von Kraftfahrzeugen die Hupenbetätigung sehr unterschiedlich lange Wege aufweist. Darüber hinaus ist der Aufbau einer solchen Einrichtung kompliziert und damit teuer.

Aus der gattungsbildenden WO 95/20233 ist es bekannt, wie in der vorgenannten Druckschrift zum Stand der Technik ausgeführt, den Hupenschalter als Schaltfolie in eine Deckschicht der Airbagabdeckung einzuarbeiten oder zwischen einer Deckschicht und einer Einlage anzuordnen. Diese Ausführungen haben jedoch den Nachteil, daß eine definierte Schaltkraft kaum realisierbar ist, da es an einer gleichmäßigen Unterstützung der biegeweichen Schaltfolie infolge des sehr unterschiedlich hohen Luftsackpaketes mangelt.

Aufgabe der Erfindung ist es, einen gattungsgemäßen am Lenkrad eines Kraftfahrzeuges anordenbaren Airbagmodul mit einem Hupenschalter zu schaffen, der als druckempfindliche Schaltfolie ausgebildet ist und bei dem der Betätigungsweg und die Schaltkraft unabhängig von der Pack-Toleranz des Luftsackes gleichbleibend ist.

Erfindungsgemäß wird diese Aufgabe durch die kennzeichnenden Merkmale des Patentanspruches 1 gelöst.

Da die Dicke des Luftsackmaterials eindeutig bestimmt ist und bezogen auf eine Lage eng tolerierbar ist, kann auch der Schaltweg zur Betätigung des Hupenschalters genau und innerhalb einer Serie wiederholbar festgelegt werden. Der Hupenschalter kann somit in einfacher Weise durch eine Schaltfolie gebildet werden, die mit definiertem Druck und geringem Schaltweg anspricht.

Vorteilhafte Ausführungsformen sind durch die weiteren Patentansprüche gegeben.

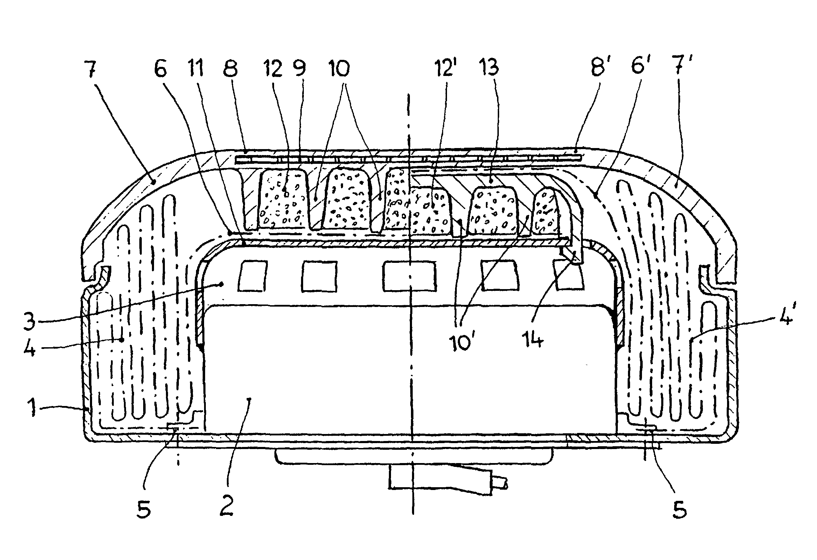

Zwei Ausführungsbeispiele der Erfindung sind nachstehend anhand einer Zeichnung näher beschrieben. Die einzige Figur zeigt ein Airbagmodul, anbringbar an einem Lenkrad, im Schnitt, wobei jeweils links und rechts der Mittellinie eine gesonderte Ausführungsform dargestellt ist.

In einem Gehäuse 1 des Airbagmoduls ist ein Gasgenerator 2 befestigt, der an seiner Oberseite einen kappenförmigen Diffusor 3 trägt. Ringförmig um den Gasgenerator 2 und den Diffusor 3 ist ein gefalteter Luftsack 4 angeordnet, der mit seinem Rand 5 in an sich bekannter Weise am Boden des Gehäuses 1 befestigt ist. Eine einzelne Lage 6 des Luftsackes 4 bildet dessen Boden und erstreckt sich über den Gasgenerator 2 und somit über den Diffusor 3 hinweg. Eine Kappe 7 mit elastischer Wand 8 deckt den Airbagmodul zum Fahrzeuginnenraum hin ab. In die elastische Wand 8 ist eine auf Druck ansprechende Schaltfolie 9 eingelagert und mittels nicht dargestellten elektrischen Leitungen mit einer Spannungsquelle sowie mit einer Hupe so verbunden, daß bei Druck auf die Schaltfolie 9 ein Kontakt geschlossen ist und Strom von der Spannungsquelle zu der Hupe fließt.

Bei der in der Zeichnung links von der Mittellinie dargestellten Ausführung sind an der Unterseite der elastischen Wand 8 der Kappe 7 Stützrippen 10 angebracht, die sich bis nahe an die Begrenzung des Diffusors 3 erstrecken. Zwischen den Enden der Stützrippen 10 und dem Diffusor 3 liegt die den Boden des Luftsackes 4 bildende einzelne Lage 6. Der obere Deckel des Diffusors 3 wirkt somit als Stützkörper 11, auf dem sich bei einem äußeren Druck auf die äußere Seite der elastischen Wand 8, nämlich bei einer Hupenbetätigung, die innere Seite über die Stützrippen 10 abstützt. Die einzelne Lage 6 des Luftsackes 4 zwischen den Stützrippen 10 und dem Stützkörper 11 verfälscht den vorgegebenen Schaltweg des Hupenschalters nicht. Der Raum zwischen den Stützrippen 10 ist mit einem Schaumstoff 12 ausgefüllt, so daß bei einem Kopfaufprall auf die Wand 8 im Fall eines Crashs die erforderliche Energieaufnahme gewährleistet ist.

Ein zweites Ausführungsbeispiel der Erfindung ist in der Zeichnung rechts der Mittellinie dargestellt, wobei übereinstimmende Teile mit gleichen Bezugszeichen wie beim zuvor beschriebenen Ausführungsbeispiel versehen sind.

Der Boden des Gassackes 4' ist als einzelne Lage 6' unmittelbar unter der elastischen Wand 8' der Kappe 7' entlanggeführt. Zwischen der Lage 6' und dem vom Diffusor 3 gebildeten Stützkörper 11 befindet sich ein Rippenkörper 13, der mit federnden Haken 14 am Stützkörper 3 befestigt ist. Der Rippenkörper 13 weist Stützrippen 10' auf, die sich auf dem Stützkörper 11 abstützen. Der Zwischenraum zwischen den Stützrippen 10' ist mit einem Schaumstoff 12' ausgefüllt, der zusammen mit den Stützrippen 10' einen Kopfaufprall auf den Airbagmodul dämpft. Eine solche Bauart kann gegenüber der zuerst beschriebenen Bauart dann Vorteile haben, wenn die Härte der Stützrippen aus dem elastischen Material der Wand 8 nicht ausreicht, um die kinetische Energie eines auftreffenden Körperteils durch Verformungsenergie aufzunehmen.

## Patentansprüche

1. Am Lenkrad eines Kraftfahrzeuges anordenbarer Airbagmodul mit einem als druckempfindliche Schaltfolie (9) ausgebildeten Hupenschalter, wobei die Schaltfolie (9) in einer zum Fahrzeuginnenraum weisenden elastischen Wand (8, 8') einer den Airbagmodul abdeckenden Kappe (7) eingelagert ist, die Wand (8, 8') von einem Stützkörper (11) beabstandet ist und ein Luftsack (4, 4') mit nur einer Lage (6, 6') zwischen der Wand (8, 8') und dem Stützkörper (11) liegt, **dadurch gekennzeichnet, daß** entweder an der Unterseite der elastischen Wand (8) als deren Bestandteil Stützrippen (10) angebracht sind die sich bis nahe an den Stützkörper (11) erstrecken und die eine Lage (6) des Luftsackes (4) zwischen den Stützrippen (10) und dem Stützkörper (11) angeordnet ist, oder daß ein Rippenkörper (13) mit Stützrippen (10') vorgesehen ist, der auf dem Stützkörper (11) aufliegt und die eine Lage (6') des Luftsackes (4') zwischen dem Rippenkörper (13) und der elastischen Wand (8') angeordnet ist.

2. Airbagmodul nach Anspruch 1, **dadurch gekennzeichnet, daß** der Rippenkörper (13) mit dem Stützkörper (11) verbunden ist.

3. Airbagmodul nach Anspruch 1 oder 2, **dadurch gekennzeichnet, daß** der Stützkörper (11) von einem Diffusor (3) eines Gasgenerators (2) gebildet ist.

4. Airbagmodul nach zumindest einem der Ansprüche 1 bis 3, **dadurch gekennzeichnet, daß** der Luftsack (4, 4') ringförmig um den Stützkörper (11) gefaltet angeordnet und mit seinem Rand (5) am Gehäuse (1) des Airbagmoduls befestigt ist sowie mit der einen Lage (6, 6') den Stützkörper (11) überspannt.

## Claims

1. Airbag module which can be arranged on the steering wheel of a motor vehicle, with a horn switch designed as a pressure-sensitive switching film (9), wherein the switching film (9) is mounted in a resilient wall (8, 8') of a cap (7) covering the airbag module, which wall (8, 8') faces towards the vehicle interior, the wall (8, 8') is spaced apart from a supporting body (11), and an airbag (4, 4') with only one layer (6, 6') lies between the wall (8, 8') and the supporting body (11), **characterised in that** either on the lower side of the resilient wall (8) as part thereof are mounted supporting ribs (10) which extend almost to the supporting body (11) and one layer (6) of the airbag (4) is arranged between the supporting ribs (10) and the supporting body (11), or a rib body (13) with supporting ribs (10') is provided which rests on the supporting body (11) and one layer (6') of the airbag (4') is arranged between the rib body (13) and the resilient wall (8').

2. Airbag module according to claim 1, **characterised in that** the rib body (13) is connected to the supporting body (11).

3. Airbag module according to claim 1 or 2, **characterised in that** the supporting body (11) is formed by a diffuser (3) of a gas generator (2).

4. Airbag module according to one or more of claims 1 to 3, **characterised in that** the airbag (4, 4') is arranged folded in a ring round the supporting body (11) and with its edge (5) is attached to the housing (1) of the airbag module and with one layer (6, 6') spans the supporting body (11).

## Revendications

1. Module de coussin gonflable pouvant être disposé sur le volant d'un véhicule automobile, comportant un commutateur de klaxon conformé en feuille de contact (9) sensible à la pression, la feuille de contact (9) étant intégrée dans une paroi (8, 8') élastique, tournée vers l'intérieur du véhicule, d'un couvercle (7), qui recouvre le module de coussin gonflable, la paroi (8, 8') étant distante d'un élément-support (11) et une poche à air (4, 4') étant disposée avec seulement une couche entre la paroi (8, 8') et l'élément-support (11), **caractérisé en ce que** soit des nervures d'appui (10) qui s'étendent jusqu'à proximité de l'élément-support (11) sont disposées sur la face inférieure de la paroi (8) élastique, en tant qu'éléments constitutifs de celle-ci, et l'une (16) des couches de la poche à air (4) est disposée entre les nervures d'appui (10) et l'élément-support (11), soit il est prévu un élément nervuré (13), avec des nervures (10'), qui repose sur l'élément-support (11), et l'une (6') des couches de la poche à air (4') est disposée entre l'élément nervuré (13) et la paroi élastique (8').

2. Module de coussin gonflable selon la revendication 1, **caractérisé en ce que** l'élément nervuré (13) est lié à l'élément-support (11).

3. Module de coussin gonflable selon la revendication 1 ou 2, **caractérisé en ce que** l'élément-support (11) est formé par un diffuseur (3) d'un générateur de gaz (2).

4. Module de coussin gonflable selon au moins une des revendications 1 à 3, **caractérisé en ce que** la poche à air (4, 4') est disposée pliée en anneau autour de l'élément-support (11), est fixée par son bord (5) au boîtier (1) du module de coussin gonflable et recouvre l'élément-support (11) avec l'une de ses couches (6, 6').
